# EUROPÄISCHE PATENTSCHRIFT

(11) **EP 2 497 674 B1**
(45) Veröffentlichungstag und Bekanntmachung des Hinweises auf die Patenterteilung: **22.04.2015**
(21) Anmeldenummer: 12158381.9
(22) Anmeldetag: 07.03.2012
(51) Int. Cl.: B60L 5/19

(54) **Stromabnehmer**
Current collector
Prise de courant

(30) Priorität: 07.03.2011 DE 102011013267
(43) Veröffentlichungstag der Anmeldung: 12.09.2012
(73) Patentinhaber: Stemmann-Technik GmbH, 48465 Schüttorf (DE); Bombardier Transportation GmbH, 10785 Berlin (DE)
(72) Erfinder: Tessmer, Wolfram, 13587 Berlin (DE); Maas, Jörg-Torsten, 16515 Oranienburg (DE); Draxl, Andreas, 66999 Hinterweidenthal (DE); Dierschke, Thomas, 69214 Eppelheim (DE)
(74) Vertreter: Griepenstroh, Jörg

(56) Entgegenhaltungen:
- EP-A1- 0 444 973
- EP-A1- 1 361 103
- DE-A1- 19 914 566
- DE-A1-102008 056 542
- DE-C1- 19 814 417

## Beschreibung

Die Erfindung betrifft einen Stromabnehmer gemäß den Merkmalen des Patentanspruchs 1.

Stromabnehmer dienen zur Übertragung elektrischer Energie von einer fest montierten, Strom führenden Oberleitung zu elektrischen Komponenten des angetriebenen Fahrzeugs. Solche Stromabnehmer finden sich insbesondere an gleisgebundenen Fahrzeugen. Bei moderneren Schienenfahrzeugen kommt aufgrund der leichteren Bauweise in der Regel der so genannte Einholmstromabnehmer zum Einsatz. Die Höhenverstellung der Stromabnehmer erfolgt elektrisch, hydraulisch oder pneumatisch gegenüber dem fahrzeugseitigen Grundrahmen des Stromabnehmers. Auf den Grundrahmen ist ein Stangenwerk, bestehend aus Unterarm, Lenkerstange und Oberarm und an diesem eine Stromabnehmerwippe mit einer Schleifleistenanordnung zur Kontaktierung mit dem Fahrdraht der Oberleitung angeordnet. In Abhängigkeit von der Spannung und den zu übertragenen Stromstärken können eine oder mehrere Schleifleisten vorgesehen sein.

Ein wesentliches Element der Stromabnehmerwippe ist eine quer zur Fahrtrichtung verlaufende Bügelanordnung, die endseitig Auflaufhörner aufweist. Diese sind nach unten, d. h. zum Fahrdraht weg und zum Schienenfahrzeug hin, gebogen. Mittels der Auflaufhörner wird verhindert, dass sich der Stromabnehmer an der Oberleitung verhakt, wenn die Oberleitung durch seitliche Auslenkung den Schleifleistenbereich verlassen sollte. Aufgrund unterschiedlicher Stromübertragungssysteme sind auch unterschiedliche Breiten der Stromabnehmerwippen erforderlich. In Frankreich beträgt die erforderliche Breite beispielsweise 1.450 mm, wohingegen in Deutschland eine Wippenbreite von 1.950 mm verlangt wird. Es gibt auch weitere Standards mit Breiten von 1.600mm und 1.800 mm. Im grenzüberschreitenden Verkehr waren Schienenfahrzeuge daher mit unterschiedlichen Stromabnehmern für die jeweiligen Stromübertragungssysteme auszustatten.

Die DE 199 14 566 A1 schlägt aus diesem Grund einen Stromabnehmer für Mehrsystem-Schienenfahrzeuge vor, bei welchen zwei separate, in Längsrichtung des Fahrzeugs voneinander beabstandete und quer zu ihm verlaufende Bügel mit je einem seitlichen Auflaufhorn an einer Wippe angeordnet sind, wobei die beiden Auflaufhörner zu entgegengesetzten Seiten des Fahrzeugs weisen und wobei die Bügel und damit die beiden Auflaufhörner mittels je einer hydraulischen oder pneumatischen Stelleinrichtung gegensätzlich zueinander quer zur Fahrtrichtung verschiebbar sind. Zusätzlich sind zwei in Längsrichtung des Fahrzeugs zueinander beabstandete, an der Wippe angeordnete Schleifleisten durch je eine weitere hydraulische oder pneumatische Stelleinrichtung gegensätzlich zueinander quer zur Fahrtrichtung verschiebbar. Auf diese Weise erfolgt die Anpassung an verschiedene Breiten der Stromübertragungssysteme. Es wird als nachteilig angesehen, dass mehrere quer zur Längsrichtung des Fahrzeugs im Abstand zueinander verlaufende Bügel vorgesehen sind, durch welche die Stromabnehmerwippe schwerer wird, wobei das zusätzliche Gewicht auch auf die erforderlichen zusätzlichen pneumatischen oder hydraulischen Stelleinrichtungen zurückzuführen ist.

Durch die DE 10 2008 056 542 A1 zählt ein Stromabnehmer für Schienenfahrzeuge zum Stand der Technik, bei welchem die Breite der Stromabnehmerwippe an mindestens zwei unterschiedliche Stromübertragungssysteme anpassbar ist. Die Wippe besitzt eine oder mehrere Schleifleisten mit einer Bügelanordnung, die an jedem Ende ein Auflaufhorn aufweist. Die Auflaufhörner sind gegensätzlich zueinander und quer zur Fahrtrichtung verschiebbar. Der Abstand zwischen den Auflaufhörnern ist über eine Stelleinrichtung veränderbar. Die Bügelanordnung wird dabei von einem einzigen Bügel gebildet. Die beiden Auflaufhörner sollen entlang einer gemeinsamen Achse symmetrisch zueinander derart verschiebbar sein, dass der Bügel für mindestens zwei stromsystemabhängige Wippenbreiten einsetzbar ist. Die Stelleinrichtung ist dem Bügel zugeordnet und weist mindestens eine fluidbetriebene Zylinder-Kolben-Anordnung und mindestens eine damit zusammenwirkende Rückholfeder auf. Bei dieser Anordnung ist das Gewicht der Bügel geringer, da nur ein Paar von Bügeln vorgesehen ist. Die Bügel sind sowohl in der eingefahrenen als auch in der ausgefahrenen Position für die Definition des Profils der Stromabnehmerwippe wirksam, da die Schleifleisten selbst keine Auflaufhörner besitzen.

In der DE 93 04 251 U1wird ebenfalls ein Stromabnehmer für grenzüberschreitenden Zugverkehr beschrieben, wobei der Stromabnehmer nicht nur eine Nutzung in verschiedenen Lichtraumprofilen ermöglichen, sondern gleichzeitig eine günstige Aerodynamik besitzen soll. Die erfindungsgemäße Wippe soll zumindest ein feststehendes Schleifstück sowie ein zu diesem senkrecht zur Längsachse des Fahrzeugs verstellbares Schleifstück umfassen. Insbesondere besteht das verstellbare Schleifstück aus zwei Schleifstückabschnitten, die zueinander beabstandbar angeordnet sind. Dabei sollen die Schleifstückabschnitte symmetrisch zu einer das feststehende Schleifstück mittig schneidenden Symmetrielinie angeordnet sein. Die verstellbaren Schleifstückabschnitte selbst können endseitig Auflaufhörner aufweisen. Dadurch kann die Breite der Wippe auf unterschiedliche Lichtraumprofile eingestellt werden, wobei die verstellbaren Schleifstücke zu dem feststehenden Schleifstück in Zugrichtung betrachtet überlappend angeordnet sind.

Eine besondere Herausforderung im Hinblick auf die Gestaltung von Stromabnehmern für den grenzüberschreitenden Schienenverkehr ist die Anpassung an die verschiedenen Lichtraumprofile, denn bevorzugt soll ein Stromabnehmer die Nachrüstung von Fahrzeugen ermöglichen, die beispielsweise in Deutschland und den deutschen Nachbarländern zugelassen werden können. Maßgeblich ist für diesen Fall die Einhaltung einschlägiger europäischer Normen bezüglich des Zusammenwirkens des Stromabnehmers und der Fahrleitung (EN 50367). Beispielsweise müsste für die Schweiz das Lichtraumprofil EN 50367 B2 eingehalten werden, während für Deutschland und Österreich das Lichtraumprofil EN 50367 B3 eingehalten werden muss. Die Profile unterscheiden sich voneinander sowohl was die Wippenhöhe angeht als auch was die isolierten Längen der Auflaufhörner betrifft.

Der Erfindung liegt mithin die Aufgabe zugrunde, einen in der Breite verstellbaren Stromabnehmer aufzuzeigen, welcher aufgrund seiner besonderen geometrischen Gestaltung geeignet ist, sowohl die Anforderungen an die Lichtraumprofile im grenzüberschreitenden Verkehr, insbesondere in Deutschland, Österreich, der Schweiz und Frankreich, zu erfüllen.

Diese Aufgabe wird durch einen Stromabnehmer mit den Merkmalen des Patentanspruchs 1 gelöst.

Vorteilhafte Weiterbildungen der Erfindung sind Gegenstand der Unteransprüche.

Bei dem erfindungsgemäßen Stromabnehmer für elektrisch angetriebene Fahrzeuge ist eine Stromabnehmerwippe vorgesehen, die wenigstens eine quer zur Fahrtrichtung angeordnete Schleifleiste aufweist. Die Schleifleiste weist wiederum ein feststehendes Schleifstück und zwei gegenüber dem feststehenden Schleifstück in entgegengesetzte Richtungen verlagerbare Schleifstücke auf, welche an quer zur Fahrtrichtung angeordneten Bügeln angeordnet sind. Die Schleifleiste besitzt an ihren Enden Schleifleistenauflaufhörner. Die Bügel besitzen an ihren Enden Bügelauflaufhörner. Das besondere ist, dass die Bügelauflaufhörner in der eingefahrenen Position der Bügel seitlich nicht über das von der feststehenden Schleifleiste und den Schleifleistenauflaufhörnern begrenzte Lichtraumprofil vorstehen. Nachfolgend wird der Begriff Lichtraumprofil vereinfachend durch Profil abgekürzt.

Es gibt eine Vielzahl von Möglichkeiten, die verschiedenen Profile durch verstellbare Bügel und/oder verstellbare Schleifleisten abzubilden, wobei eine Profilüberschreitung vermieden werden muss, eine Profilunterschreitung aber ebenso vermieden werden soll. Aufgrund der unvermeidbaren Wankbewegungen des Fahrzeugs hat sich jedoch gezeigt, dass eine besondere Abstimmung im Übergangsbereich zwischen der Geometrie der Bügelauflaufhörner und der Schleifleistenauflaufhörner wichtig ist. Insbesondere spielt auch der Übergangsbereich zwischen den verlagerbaren und den feststehenden Schleifstücken eine große Rolle, da die Übergangswinkel zwischen den Schleifleisten und den jeweiligen Auflaufhörnern Einfluss auf eine Kraftkomponente in Y-Richtung, d. h. auf eine Krafteinwirkung quer zur Fahrtrichtung, haben.

Es hat sich überraschenderweise gezeigt, dass bei einer Einstellung zwischen den Extremwerten (1.450 mm Wippenbreite in Deutschland bzw. 1.950 mm Wippenbreite in Frankreich) die besten Ergebnisse erreicht werden können, wenn die Bügelauflaufhörner in der eingefahrenen Position der Bügel seitlich nicht über das von der feststehenden Schleifleiste und den Schleifleistenauflaufhörnern begrenzte Profil vorstehen.

Die eingefahrene Position bedeutet in diesem Fall eine Einstellung auf eine Breite von 1.450 mm. In diesem Fall bestimmen also allein die Schleifleistenauflaufhörner das Profil des Stromabnehmers.

In der ausgefahrenen Position (1.950 mm) stehen die Bügelauflaufhörner seitlich vollständig über die Schleifleistenauflaufhörner vor. Auch die Schleifleistenbreite ist durch die seitlich verlagerten Schleifstücke vergrößert. In der ausgefahrenen Position treten also die Schleifleistenauflaufhörner hinter die Bügelauflaufhörner zurück, so dass in dieser Position nur ein einziges Auflaufhorn maßgeblich das Profil bestimmt. Auf diese Weise ist für die eingefahrene und für die ausgefahrene Position eine ideale Anpassung an die jeweiligen Lichtraumprofile möglich, ohne dass es Überlappungen zwischen den einzelnen Auflaufhorngeometrien gibt, was zu Übergangswinkeln zwischen den Auflaufhörnern führen könnte, die wiederum zu erhöhten Kraftkomponenten in Y-Richtung führen würden.

In vorteilhafter Ausgestaltung stehen daher die Bügelauflaufhörner in der eingefahrenen Position der Bügel auch in der Höhe nicht über das von der feststehenden Schleifleiste und den Schleifleistenauflaufhörnern begrenzte Profil vor.

Theoretisch ist es möglich, dass die Bügelauflaufhörner in der eingefahrenen Position deckungsgleich mit den Schleifleistenauflaufhörnern sind. Vorzugsweise treten die Bügelauflaufhörner in der eingefahrenen Position jedoch zumindest teilweise hinter das von den Schleifleistenauflaufhörnern begrenzte Profil zurück.

Die Bügelauflaufhörner und die Schleifleistenauflaufhörner können jeweils gerade Abschnitte aufweisen, die jeweils einen gegenüber der Horizontalen gemessenen Auflaufhornwinkel besitzen. Es wird als vorteilhaft angesehen, wenn der Auflaufhornwinkel der Bügelauflaufhörner größer ist als der Auflaufhornwinkel der Schleifleistenauflaufhörner. Für eine optimale Profilanpassung wird es als zweckmäßig angesehen, wenn der Auflaufhornwinkel der Bügelauflaufhörner 40° +/-2° beträgt, während der Auflaufhornwinkel der Schleifleistenauflaufhörner 30° +/- 2° beträgt.

Die Wahl dieser Auflaufhornwinkel erfolgte insbesondere zur Anpassung an die Lichtraumprofile, die bei Wippenbreiten von 1.450 mm bzw. 1.950 mm vorausgesetzt werden. Die Stromabnehmerwippe ist durch Verlagerung der Bügel insbesondere zwischen diesen beiden Breiten als Extremwerte verstellbar.

In diesem Zusammenhang kann auch die Länge der Schleifleiste durch Ausfahren der verlagerbaren Schleifstücke verlängerbar sein.

Ein weiterer wesentlicher Aspekt für den grenzüberschreitenden Einsatz ist, dass die Bügelauflaufhörner an ihren Enden in einer auf einer Horizontalebene projizierte Länge von 175 mm +/- 25 mm außenseitig elektrisch isoliert ausgeführt sind. Die Isolierung bestimmt die nutzbare Arbeitsbreite des Stromabnehmers, die über die reine Breite der Schleifleiste hinausgeht.

Ferner ist es von Vorteil, wenn ein in einer Vertikalebene gemessener Übergangswinkel zwischen den verlagerbaren Schleifstücken und dem die verlagerbaren Schleifstücke tragenden Bügelauflaufhorn ≤ 30° ist. Insbesondere ist der Winkel ≤ 20° und vorzugsweise ≤ 15°.

In erfindungsgemäßer Weiterbildung sind die Bügel zusammen mit den Schleifleisten Teil einer gemeinsam gefederten Masse.

Darüber hinaus wird es als zweckmäßig angesehen, wenn ein Übergangsradius zwischen dem geraden Abschnitt des Bügelauflaufhorns und einem das Schleifstück tragenden oberen Abschnitt des Bügelauflaufhorns 260 mm +/- 50 mm beträgt.

In vorteilhafter Weiterbildung liegt ein unterer Übergangsradius zwischen dem geraden Abschnitt des Bügelauflaufhorns und einem demgegenüber nach unten abgewinkelten Ende in einem Bereich von 58 mm +/- 10 mm. Durch die gewählten Radien kann eine optimale Profilanpassung erreicht werden. Zudem kann der Übergangsradius zwischen einem geraden Abschnitt des Schleifleistenauflaufhorns und einem demgegenüber nach unten abgewinkelten unteren Ende des Schleifleistenauflaufhorns in einem Bereich von 140 mm +/-10mm liegen. Das abgewinkelte untere Ende befindet sich dabei vorzugsweise auf der gleichen Höhe wie das untere Ende der Bügelauflaufhörner, so dass die Bügelauflaufhörner in der eingefahrenen Position auch nach unten hin nicht über das Lichtraumprofil der Schleifleistenauflaufhörner vorstehen. Die Länge der Enden kann dabei so gewählt sein, dass die gegenüber den geraden Abschnitten der Schleifleistenauflaufhörner nach unten abgewinkelten Enden der Schleifleistenauflaufhörner über eine größere Höhe als die entsprechenden Enden der Bügelauflaufhörner erstrecken, ohne dabei über die Enden der Bügelauflaufhörner nach unten vorzustehen. Die größere Erstreckung der unteren Enden der Schleifleistenauflaufhörner muss nicht zwangsläufig bedeuten, dass diese sich über einen längeren Bereich in Vertikalrichtung erstrecken. Der relativ große Übergangsradius an den Schleifleistenauflaufhörnern von 140 mm +/-10 mm im Verhältnis zu dem kleineren Radius an den Bügelauflaufhörnern führt dazu, dass die Enden der Schleifleistenauflaufhörner quasi Ausläufer des gekrümmten Bereichs der Schleifleistenauflaufhörner sind.

Die Bügelauflaufhörner selbst können U-förmig konfiguriert sein. Das ist so zu verstehen, dass zwei auf einer Fahrzeugseite angeordnete Bügel, die jeweils einer von zwei im Abstand aneinander angeordneten Schleifleisten zugeordnet sind, über Bügelauflaufhörner miteinander verbunden sind. In der Draufsicht von oben ergibt sich dadurch ein im Wesentlichen U-förmiger Verlauf, welche in der Seitenansicht den Anforderungen an die jeweiligen Lichtraumprofile genügt.

In alternativer Ausführungsform können die Bügelauflaufhörner auch Y-förmig konfiguriert sein. Das bedeutet, dass die Bügel einen quer zur Fahrtrichtung abstehenden Schenkel besitzen entsprechend dem unteren Arm des Buchstabens Y. Die beiden oberen Arme des Buchstabens Y sind mit den jeweiligen verstellbaren Bügeln verbunden. Es gibt also einen V- oder U-förmigen Teil verbunden mit einem einschenkeligen Längenabschnitt. Unabhängig davon, ob die Bügelauflaufhörner U-förmig oder Y-förmig konfiguriert sind, ergibt sich kein Unterschied in der Anpassung an die jeweiligen Lichtraumprofile. Die Radien und Übergangsbereiche können bei Y-und U-förmigen Bügeln identisch gewählt werden. Der einzige Unterschied besteht darin, dass der Scheitelpunkt eines U-förmigen Bügelauflaufhorns nicht im Bereich des nach unten abgewinkelten Endes liegt, sondern im Abstand hiervon etwa auf halber Länge des Bügelauflaufhorns. Hier befindet sich vorzugsweise ein gerader Abschnitt des Bügelauflaufhorns. Dieser Bereich bietet sich für eine Anbindung des unteren Schenkels des Bügelauflaufhorns an.

Die Erfindung wird nachfolgend anhand von in den schematischen Zeichnungen dargestellten Ausführungsbeispielen näher erläutert. Es zeigt:
- Figur 1: eine erste Ausführungsform einer Stromabnehmerwippe für ein Schienenfahrzeug in der ausgefahrenen Position in Frontansicht;
- Figur 2: die Stromabnehmerwippe der Figur 1 in eingefahrener Position;
- Figur 3: die Stromabnehmerwippe der Figuren 1 und 2 in der Seitenansicht;
- Figur 4: eine Seitenansicht einer weiteren Ausführungsform einer Stromabnehmerwippe;
- Figur 5: die Stromabnehmerwippe der Figur 4 in der Draufsicht;
- Figur 6: die Stromabnehmerwippe der Figur 5 in der ausgefahrenen Position in Frontansicht und
- Figur 7: ein vergrößerter Ausschnitt eines Endbereichs der Stromabnehmerwippe der Figur 6 in der Frontansicht.

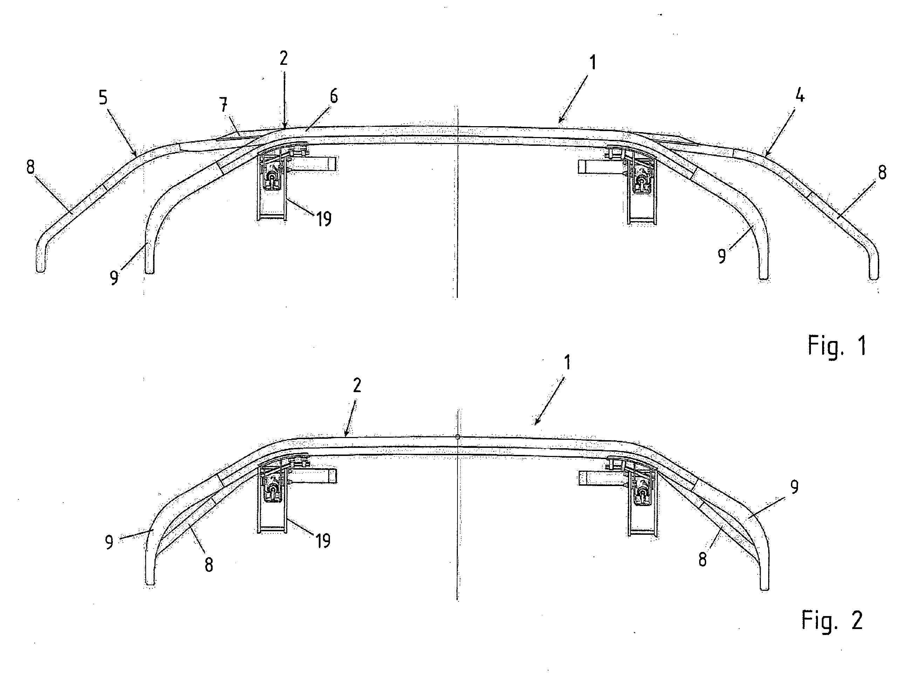

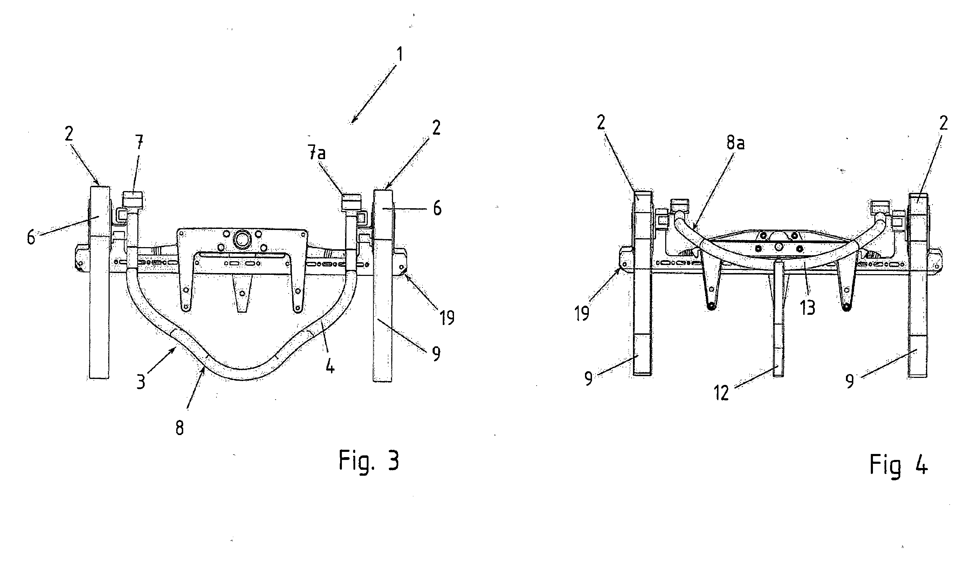

Figur 1 zeigt eine Stromabnehmerwippe 1 in einer Frontansicht. Die Stromabnehmerwippe 1 ist Bestandteil eines nicht näher dargestellten Stromabnehmers für ein Schienenfahrzeug. Die Stromabnehmerwippe 1 dient zur Kontaktierung eines Fahrdrahts einer Oberleitung. Die Stromabnehmerwippe 1 umfasst zwei quer zur Fahrtrichtung angeordnete Schleifleisten 2, die am besten in Figur 3 zu erkennen sind. Zwischen den Schleifleisten 2 befindet sich eine Bügelanordnung 3 bestehend aus zwei in entgegengesetzte Richtungen verlagerbaren Bügeln 4, 5. Anhand der Figur 3 ist zu erkennen, dass die Schleifleiste 2 ein feststehendes Schleifstück 6 umfasst sowie ein gegenüber dem feststehenden Schleifstück 6 quer zur Fahrtrichtung verlagerbares Schleifstück 7, 7a, das an der Bügelanordnung 3 befestigt ist und zusammen mit den Bügeln 4, 5 quer zur Fahrtrichtung verlagerbar ist. Insgesamt gibt es vier verlagerbare Schleifstücke 7, 7a und zwei feststehende Schleifstücke 6. Figur 3 zeigt, dass der Bügel 4 im Wesentlichen U-förmig konfiguriert ist, was durch ein so genanntes Bügelauflaufhorn 8 bedingt ist, das sich von dem in der Bildebene der Figur 3 linken verlagerbaren Schleifstück 7 zu dem anderen verlagerbaren Schleifstück 7a erstreckt.

Die gesamte Anordnung ist bezüglich der Mittellängsachse der Stromabnehmerwippe 1, also in Fahrtrichtung, spiegelsymmetrisch ausgebildet.

Bei der Erfindung kommt es maßgeblich auf die Konturierung der Bügelauflaufhörner 8, 8a an, die einem bestimmten Lichtraumprofil genügen muss, insbesondere dem Begrenzungsprofil gemäß EN 50367 B3.

In Figur 1 befinden sich die Bügel 4, 5 in der ausgefahrenen Position. Es ist zu erkennen, dass die nach unten gekrümmten Bügelauflaufhörner 8 über so genannte Schleifleistenauflaufhörner 9 der Schleifleiste 2 vorstehen. Anhand der Gegenüberstellung der Figuren 1 und 2 ist zu erkennen, dass die Bügelauflaufhörner 8 gegenüber den Schleifleistenauflaufhörnern 9 vollständig zurücktreten, wenn sich die Bügelauflaufhörner 8 in der eingefahrenen Position befinden. Die Bügelauflaufhörner 8 stehen dann weder seitlich noch in der Höhe über die Schleifleiste 2 und über die Schleifleistenauflaufhörner 9 vor. In der Figur 3 ist sogar eine Profilunterschreitung im Bereich der Bügelauflaufhörner 8 zu erkennen, was aber unerheblich ist, da das Lichtraumprofil in der eingefahrenen Position ausschließlich durch die Geometrie der Schleifleiste 2 und die Schleifleistenauflaufhörner 9 bestimmt ist.

Die Verstellung der Bügel 4, 5 erfolgt insbesondere in einer abgesenkten Position des Stromabnehmers. Denkbar ist aber auch, dass über geeignete elektrische, pneumatische oder hydraulische Aktoren eine Verstellung in angehobener Position, d. h. in von dem Grundrahmen des Stromabnehmers abgehobener Position, erfolgt.

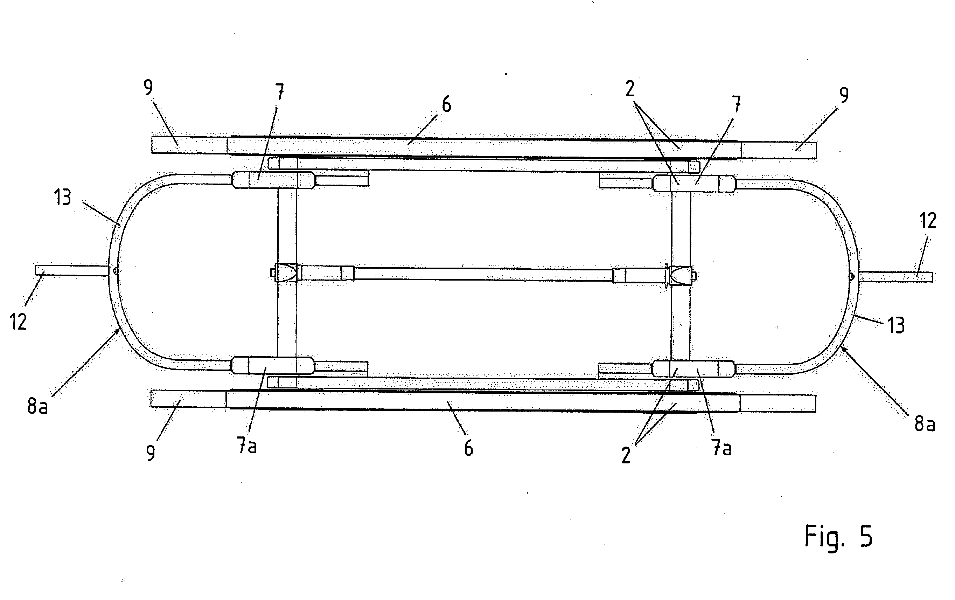

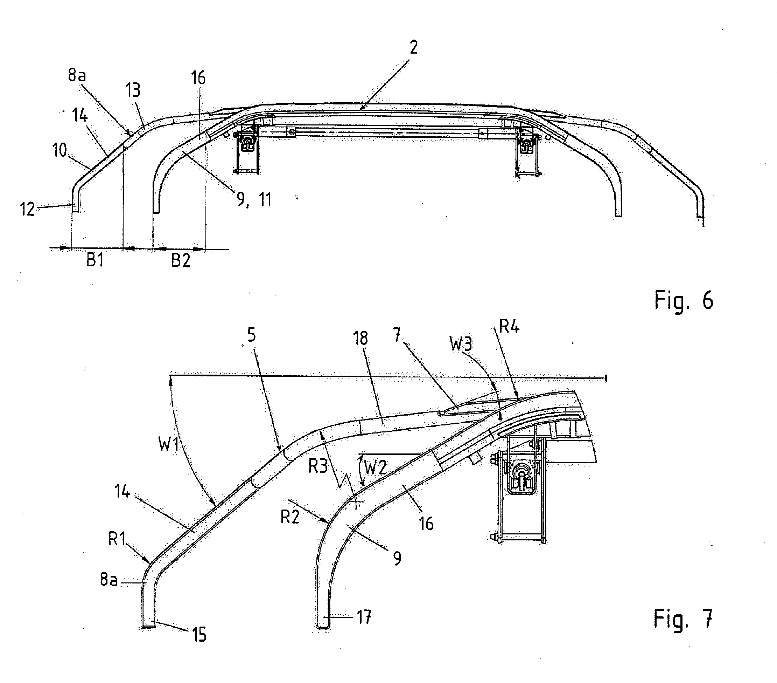

Die besondere Geometrie der Bügelauflaufhörner 8 setzt sich aus verschiedenen Abschnitten zusammen. Angefangen im mittleren Bereich ergibt sich gemäß der Darstellung der Figur 1 zunächst eine Verbreiterung der Schleifleiste 2, weil die verlagerbaren Schleifstücke 7 seitlich über die feststehenden Schleifstücke 6 vorstehen. Das verlagerbare Schleifstück 7 erstreckt sich bis an einen leitenden Bereich des Bügels 5. Das Bügelauflaufhorn 8 besitzt in seinem Endbereich ein isoliertes Teilstück 10 (Figur 6), das sich bei der Ausführungsform der Figuren 4 bis 7 über eine Breite B1 von ca. 150 mm erstreckt. Auch das Schleifleistenauflaufhorn 9 besitzt ein solches isoliertes Teilstück 11, allerdings mit einer Breite B2 von 165 mm. Die Isolierung ist nur außenseitig vorgesehen. Das U-förmig konfigurierte Bügelauflaufhorn 8 ist innenseitig elektrisch leitend, so dass ein Kontakt zwischen den verlagerbaren Schleifstücken 7, 7a über das jeweilige Bügelauflaufhorn 8, 8a besteht.

Das Bügelauflaufhorn 8 kann, wie in Figur 3 dargestellt, im Wesentlichen U-förmig konfiguriert sein. Die Figuren 4 bis 7 zeigen eine Alternative mit einem in der Draufsicht Y-förmigen Bügelauflaufhorn 8a, das zusätzlich zu der U-Form einen querabstehenden Schenkel 12 besitzt. Dadurch ist das Bügelauflaufhorn 8a in einem inneren Teilbereich zweischenkelig ausgeführt und in einem endseitigen Teilstück einschenkelig. Das hat den Vorteil, dass nur der Schenkel 12 elektrisch isoliert ausgeführt werden muss, während der bogenförmige Abschnitt 13 des Bügelauflaufhorns 8a leitend, also elektrisch nicht isoliert ausgeführt werden kann. Dieser bogenförmige Abschnitt 13 verbindet mithin wieder die verlagerbaren Schleifstücke 7, 7a miteinander. Bei den Figuren 4 bis 7 wird auf die zu der Ausführungsform der Figuren 1 bis 3 bereits eingeführten Bezugszeichen für identische Bauteile zurückgegriffen.

Die feststehenden Schleifstücke 6 unterscheiden sich ebenso wenig in ihrer Geometrie von denen der Ausführungsform der Figuren 1 bis 3, wie die Schleifleistenauflaufhörner 9. In der Frontansicht sind die Unterschiede zwischen den U-förmigen und Y-förmigen Bügelauflaufhörnern 8, 8a nicht mehr zu erkennen, weil sie an dasselbe Begrenzungsprofil EN 50367 B3 angepasst sind. Daher kann nachfolgend stellvertretend für beide Ausführungsformen auf die Darstellung der Figur 7 Bezug genommen werden.

Die Bügelauflaufhörner 8, 8a sowie die Schleifleistenauflaufhörner 9 besitzen jeweils einen gegenüber der Horizontalen gemessenen Auflaufhornwinkel W1, W2. Der Auflaufhornwinkel W1 der Bügelauflaufhörner 8, 8a beträgt bei diesem Ausführungsbeispiel 40°, während der Auflaufhornwinkel W2 des Schleifleistenauflaufhorns 9 kleiner ist. Er beträgt bei diesem Ausführungsbeispiel 30°. Der gerade Abschnitt 14 des Bügelauflaufhorns 8a geht zu seinem freien Ende hin über einen Übergangsradius R1 zu einem vertikal nach unten abgewinkelten Ende 15 über. Der Übergangsradius R1 beträgt bei diesem Ausführungsbeispiel 58 mm.

Der gerade Abschnitt 16 des Schleifleistenauflaufhorns 9 geht ebenfalls in ein nach unten abgewinkeltes Ende 17 über, das parallel zu dem anderen Ende 15 des Bügelauflaufhorns 8, 8a verläuft. Der Übergangsradius R2 im Übergang von dem geraden Abschnitt 16 zum Ende 17 ist jedoch größer als der Übergangsradius R1. Bei diesem Ausführungsbeispiel beträgt er 140 mm.

Zur Fahrzeugmitte hin sind die geraden Abschnitte 14, 16 ebenfalls über Radien an die weiteren Längenabschnitte des Bügels 5 bzw. der Schleifleiste 2 angeschlossen. Bei dem geraden Abschnitt 14 des Bügelauflaufhorns 8, 8a beträgt der Übergangsradius R3 bei diesem Ausführungsbeispiel 260°. Der Übergangsradius R4 der Schleifleiste 2 des feststehenden Schleifstücks 6 ist kleiner. Er beträgt bei diesem Ausführungsbeispiel 240°.

Aus der Darstellung der Figur 7 ist ferner ein Übergangswinkel W3 zwischen den verlagerbaren Schleifstücken 7 und dem sich daran anschließenden Bügelauflaufhorn 8a zu erkennen. Dieser Übergangswinkel W3 beträgt bei diesem Ausführungsbeispiel 13°. Die Verlagerung der Bügel 4, 5 erfolgt in Horizontalrichtung, so dass das in der Bildebene der Figur 7 dargestellte verlagerbare Schleifstück 7 vollständig hinter die feststehende Schleifleiste 2 zurück tritt. Dies gilt auch für das sich an das verlagerbare Schleifstück 7 anschließende leitende Teilstück 18, das sich über den Übergangsradius R3 in den geraden Abschnitt 14 erstreckt.

Wie anhand der Figur 6 zu erkennen ist, erstreckt sich das isolierte Teilstück 11 des Schleifleistenauflaufhorns 9 bis etwa mittig in den geraden Abschnitt 16 hinein.

Die Schleifleiste 2 bildet zusammen mit der Bügelanordnung 3 eine gemeinsam gefederte Masse gegenüber einem Rahmen 19 der Stromabnehmerwippe 1 (Figur 3).

### Bezugszeichen:

- 1: - Stromabnehmerwippe
- 2: - Schleifleiste
- 3: - Bügelanordnung
- 4: - Bügel
- 5: - Bügel
- 6: - feststehendes Schleifstück
- 7: - verlagerbares Schleifstück
- 7a: - verlagerbares Schleifstück
- 8: - Bügelauflaufhorn
- 8a: - Bügelauflaufhorn
- 9: - Schleifleistenauflaufhorn
- 10: - isoliertes Teilstück von 8, 8a
- 11: - isoliertes Teilstück von 9
- 12: - Schenkel
- 13: - bogenförmiger Abschnitt
- 14: - gerader Abschnitt von 8, 8a
- 15: - Ende von 8, 8a
- 16: - gerader Abschnitt von 9
- 17: - Ende von 9
- 18: - leitendes Teilstück von 8, 8a
- 19: - Rahmen

- B1: - Breite
- B2: - Breite
- R1: - Übergangsradius
- R2: - Übergangsradius
- R3: - Übergangsradius
- R4: - Übergangsradius
- W1: - Auflaufhornwinkel von 8, 8a
- W2: - Auflaufhornwinkel von 9
- W3: - Übergangswinkel zwischen 7 und 18

## Patentansprüche

1. Stromabnehmer für elektrisch angetriebene Fahrzeuge, mit einer Stromabnehmerwippe (1), die wenigstens eine quer zur Fahrtrichtung angeordnete Schleifleiste (2) aufweist, welche ein feststehendes Schleifstück (6) und zwei gegenüber dem feststehenden Schleifstück (6) in entgegengesetzte Richtungen verlagerbare Schleifstücke (7, 7a) aufweist, die an quer zur Fahrtrichtung angeordneten Bügeln (4, 5) angeordnet sind, wobei die Bügel (4, 5) an ihren Enden Bügelauflaufhörner (8, 8a) besitzen, **dadurch gekennzeichnet, dass** die feststehende Schleifleiste (2) an ihren Enden Schleifleistenauflaufhörner (9) besitzt und die Bügelauflaufhörner (8, 8a) in der eingefahrenen Position der Bügel (4, 5) seitlich nicht über das von der feststehenden Schleifleiste (2) und den Schleifleistenauflaufhörnen (9) begrenzte Profil vorstehen.

2. Stromabnehmer nach Anspruch 1, **dadurch gekennzeichnet, dass** die Bügelauflaufhörner (8, 8a) in der eingefahrenen Position der Bügel (4, 5) in der Höhe nicht über das das von der feststehenden Schleifleiste (2) und den Schleifleistenauflaufhörnern (9) begrenzte Profil vorstehen.

3. Stromabnehmer nach Anspruch 1 oder 2, **dadurch gekennzeichnet, dass** die Bügelauflaufhörner (8, 8a) in der eingefahrenen Position teilweise hinter das von den Schleifleistenauflaufhörnern (9) begrenzte Profil zurücktreten.

4. Stromabnehmer nach Anspruch 3, **dadurch gekennzeichnet, dass** die Bügelauflaufhörner (8, 8a) und die Schleifleistenauflaufhörner (9) jeweils gerade Abschnitte (14, 16) aufweisen, die jeweils einen gegenüber der Horizontalen gemessenen Auflaufhornwinkel (W1, W2) besitzen, wobei der Auflaufhornwinkel (W1) der Bügelauflaufhörner (8, 8a) größer ist als der Auflaufhornwinkel (W2) der Schleifleistenauflaufhörner (9).

5. Stromabnehmer nach Anspruch 4, **dadurch gekennzeichnet, dass** der Auflaufhornwinkel (W1) der Bügelauflaufhörner (8, 8a) 40° +/-2° beträgt, während der Auflaufhornwinkel (W2) der Schleifleistenauflaufhörner (9) 30° +/-2° beträgt.

6. Stromabnehmer nach einem der Ansprüche 1 bis 5, **dadurch gekennzeichnet, dass** die Stromabnehmerwippe (1) durch Verlagerung der Bügel (4, 5) zwischen 1450 mm und 1950 mm in der Breite (B1, B2) verstellbar ist.

7. Stromabnehmer nach einem der Ansprüche 1 bis 6, **dadurch gekennzeichnet, dass** Bügelauflaufhörner (8, 8a) an ihren Enden (15) in einer auf eine Horizontalebene projizierte Länge von 175 +/- 25 mm außenseitig elektrisch isoliert ausgeführt sind.

8. Stromabnehmer nach einem der Ansprüche 1 bis 7, **dadurch gekennzeichnet, dass** ein in der Vertikalebene gemessener Übergangswinkel (W3) zwischen den verlagerbaren Schleifstücken (7, 7a) und dem die verlagerbaren Schleifstücke (7, 7a) tragenden Bügelauflaufhorn (8, 8a) ≤ 30° ist.

9. Stromabnehmer nach einem der Ansprüche 1 bis 8, **dadurch gekennzeichnet, dass** die Bügel (4, 5) zusammen mit den Schleifleisten (2) Teil einer gemeinsam gefederten Masse sind.

10. Stromabnehmer nach einem der Ansprüche 1 bis 9, **dadurch gekennzeichnet, dass** ein Übergangsradius (R3) zwischen dem geraden Abschnitt (14) des Bügelauflaufhorns (8, 8a) und dem das Schleifstück (7, 7a) tragenden oberen Teilstück (18) des Bügelauflaufhorns (8, 8a) 260 mm +/- 50 mm beträgt.

11. Stromabnehmer nach einem der Ansprüche 1 bis 10, **dadurch gekennzeichnet, dass** ein unterer Übergangsradius (R1) zwischen dem geraden Abschnitt (14) des Bügelauflaufhorns (8, 8a) und einem demgegenüber nach unten abgewinkelten Ende (15) in einem Bereich von 58 +/-10 mm liegt.

12. Stromabnehmer nach einem der Ansprüche 1 bis 11, **dadurch gekennzeichnet, dass** ein unterer Übergangsradius (R2) zwischen einem geraden Abschnitt (16) des Schleifleistenauflaufhorns (9) und einem demgegenüber nach unten abgewinkelten unteren Ende (17) des Schleifleistenauflaufhorns (9) in einem Bereich von 140 mm +/-10 mm liegt.

13. Stromabnehmer nach einem der Ansprüche 1 bis 12, **dadurch gekennzeichnet, dass** die Breitenverstellung mittels einer Stelleinrichtung erfolgt, mit welcher die Bügel (4, 5) mit den verlagerbaren Schleifstücken (7, 7a) in abgesenkter Stellung in Wirkeingriff bringbar sind.

14. Stromabnehmer nach einem der Ansprüche 1 bis 13, **dadurch gekennzeichnet, dass** die Bügelauflaufhörner (8) U-förmig konfiguriert sind.

15. Stromabnehmer nach einem der Ansprüche 1 bis 14, **dadurch gekennzeichnet, dass** die Bügelauflaufhörner (8a) Y-förmig konfiguriert sind.

## Claims

1. Current collector for electrically powered vehicles, comprising a current collector head (1) which has at least one contact strip (2) which is arranged transversely to the direction of travel and has a fixed contact shoe (6) and two contact shoes (7, 7a) which can be moved in opposite directions relative to the fixed contact shoe (6) and are arranged on brackets (4, 5) which are arranged transversely to the direction of travel, the brackets (4, 5) having bracket horns (8, 8a) at the ends thereof, **characterised in that** the fixed contact strip (2) has contact strip horns (9) at the ends thereof and, in the retracted position of the brackets (4, 5), the bracket horns (8, 8a) do not protrude laterally beyond the profile defined by the fixed contact strip (2) and the contact strip horns (9).

2. Current collector according to claim 1, **characterised in that**, in the retracted position of the brackets (4, 5), the bracket horns (8, 8a) do not protrude vertically beyond the profile defined by the fixed contact strip (2) and the contact strip horns (9).

3. Current collector according to either claim 1 or claim 2, **characterised in that**, in the retracted position, the bracket horns (8, 8a) recede in part behind the profile defined by the contact strip horns (9).

4. Current collector according to claim 3, **characterised in that** the bracket horns (8, 8a) and the contact strip horns (9) each comprise straight portions (14, 16) which each have a horn angle (W1, W2) which is measured relative to the horizontal, the horn angle (W1) of the bracket horns (8, 8a) being greater than the horn angle (W2) of the contact strip horns (9).

5. Current collector according to claim 4, **characterised in that** the horn angle (W1) of the bracket horns (8, 8a) is 40° +/- 2°, whereas the horn angle (W2) of the contact strip horns (9) is 30° +/- 2°.

6. Current collector according to any of claims 1 to 5, **characterised in that** the width (B1, B2) of the current collector head (1) can be adjusted between 1450 mm and 1950 mm by moving the brackets (4, 5).

7. Current collector according to any of claims 1 to 6, **characterised in that** the ends (15) of the bracket horns (8, 8a) are designed to be electrically insulated on the outside thereof in a length, which is projected onto a horizontal plane, of 175 +/- 25 mm.

8. Current collector according to any of claims 1 to 7, **characterised in that** an angle of intersection (W3), measured in the vertical plane, between the movable contact shoes (7, 7a) and the bracket horn (8, 8a) supporting the movable contact shoes (7, 7a) is ≤ 30°.

9. Current collector according to any of claims 1 to 8, **characterised in that** the brackets (4, 5), together with the contact strips (2), are part of a jointly sprung mass.

10. Current collector according to any of claims 1 to 9, **characterised in that** a transition radius (R3) between the straight portion (14) of the bracket horn (8, 8a) and the upper segment (18),supporting the contact shoe (7, 7a), of the bracket horn (8, 8a) is 260 mm +/- 50 mm.

11. Current collector according to any of claims 1 to 10, **characterised in that** a lower transition radius (R1) between the straight portion (14) of the bracket horn (8, 8a) and an end (15) which is angled downwards relative thereto is in a range of 58 +/- 10 mm.

12. Current collector according to any of claims 1 to 11, **characterised in that** a lower transition radius (R2) between a straight portion (16) of the contact strip horn (9) and an end (17) of the contact strip horn (9) which is angled downwards relative thereto is in a range of 140 mm +/- 10 mm.

13. Current collector according to any of claims 1 to 12, **characterised in that** the width is adjustedusing an adjustment device, by means of which the brackets (4, 5) can be brought into operative engagement with the movable contact shoes (7, 7a) in the lowered position.

14. Current collector according to any of claims 1 to 13, **characterised in that** the bracket horns (8) have a U-shaped design.

15. Current collector according to any of claims 1 to 14, **characterised in that** the bracket horns (8a) have a Y-shaped design.

## Revendications

1. Pantographe de caténaire pour véhicules à traction électrique, comprenant un archet de pantographe (1), qui présente au moins une barre de contact (2) agencée transversalement à la direction de roulement, laquelle barre présente une pièce de contact stationnaire (6) et deux pièces de contact (7, 7a) mobiles par rapport à la pièce de contact stationnaire (6) dans des sens opposés, les deux pièces de contact mobiles étant agencées sur des arceaux (4, 5) aménagés transversalement à la direction de roulement, dans lequel les arceaux (4, 5) possèdent à leurs extrémités des cornes d'arceaux (8, 8a), **caractérisé en ce que** la barre de contact stationnaire (2) possède à ses extrémités des cornes de barre de contact (9) et, dans la position rentrée des arceaux (4, 5), les cornes d'arceaux (8, 8a) ne font pas saillie latéralement du profil délimité par la barre de contact stationnaire (2) et les cornes de barre de contact (9).

2. Pantographe ca caténaire selon la revendication 1, **caractérisé en ce que**, dans la position rentrée des arceaux (4, 5), les cornes d'arceaux (8, 8a) ne font pas saillie en hauteur du profil délimité par la barre de contact stationnaire (2) et les cornes de barre de contact (9).

3. Pantographe de caténaire selon la revendication 1 ou la revendication 2, **caractérisé en ce que**, dans la position rentrée, les cornes d'arceaux (8, 8a) se dégagent en partie en arrière du profil délimité par les cornes de barre de contact (9).

4. Pantographe de caténaire selon la revendication 3, **caractérisé en ce que** les cornes d'arceaux (8, 8a) et les cornes de barre de contact (9) présentent respectivement des sections droites (14, 16) qui possèdent respectivement un angle de corne de pantographe (W1, W2) mesuré par rapport à l'horizontale, dans lequel l'angle (W1) des cornes d'arceaux (8, 8a) est supérieur à l'angle (W2) des cornes de barre de contact (9).

5. Pantographe de caténaire selon la revendication 4, **caractérisé en ce que** l'angle (W1) des cornes d'arceaux (8, 8a) atteint 40 ° ± 2 °, tandis que l'angle (W2) des cornes de barre de contact (9) atteint 30° ± 2°.

6. Pantographe de caténaire selon l'une quelconque des revendications 1 à 5, **caractérisé en ce que** l'archet de pantographe (1) peut être réglé en largeur (B1, B2) par déplacement des arceaux (4, 5) entre 1450 mm et 1950 mm.

7. Pantographe de caténaire selon l'une quelconque des revendications 1 à 6, **caractérisé en ce que** les cornes d'arceaux (8, 8a) sont isolées électriquement côté extérieur à leurs extrémités (15) sur une longueur de 175 ± 25 mm projetée sur le plan horizontal.

8. Pantographe de caténaire selon l'une quelconque des revendications 1 à 7, **caractérisé en ce qu'**un angle de transition (W3) mesuré dans le plan vertical entre les pièces de contact mobiles (7, 7a) et les cornes d'arceaux (8, 8a) portant les pièces de contact mobiles (7, 7a) est ≤ 30 °.

9. Pantographe de caténaire selon l'une quelconque des revendications 1 à 8, **caractérisé en ce que** les arceaux (4, 5) font, conjointement avec les barres de contact (2), partie d'une masse à ressorts commune.

10. Pantographe de caténaire selon l'une quelconque des revendications 1 à 9, **caractérisé en ce qu'**un rayon de transition (R3) entre la section droite (14) de la corne d'arceau (8, 8a) et la pièce partielle supérieure (18) de la corne d'arceau (8, 8a) portant la pièce de contact (7, 7a) atteint 260 mm ± 50 mm.

11. Pantographe de caténaire selon l'une quelconque des revendications 1 à 10, **caractérisé en ce qu'**un rayon de transition inférieur (R1) entre la section droite (14) de la corne d'arceau (8, 8a) et une extrémité (15) tournée vers le bas par rapport à celle-ci se situe dans une plage de 58 mm ± 10 mm.

12. Pantographe de caténaire selon l'une quelconque des revendications 1 à 11, **caractérisé en ce qu'**un rayon de transition inférieur (R2) entre une section droite (16) de la corne de barre de contact (9) et une extrémité inférieure (17), tournée vers le bas par rapport à celle-ci, de la corne de barre de contact (9) se situe dans une plage de 140 mm ± 10 mm.

13. Pantographe de caténaire selon l'une quelconque des revendications 1 à 12, **caractérisé en ce que** le réglage en largeur se fait au moyen d'un dispositif de réglage avec lequel les arceaux (4, 5) peuvent être amenés en prise avec les pièces de contact mobiles (7, 7a) en position baissée.

14. Pantographe de caténaire selon l'une quelconque des revendications 1 à 13, **caractérisé en ce que** les cornes d'arceaux (8) sont configurées en forme de U.

15. Pantographe de caténaire selon l'une quelconque des revendications 1 à 14, **caractérisé en ce que** les cornes d'arceaux (8a) sont configurées en forme de Y.
